# FASCICULE DE BREVET EUROPEEN

(11) **EP 3 122 603 B1**
(45) Date de publication et mention de la délivrance du brevet: **20.05.2020**
(21) Numéro de dépôt: 15719782.3
(22) Date de dépôt: 24.03.2015
(51) Int. Cl.: B60T 8/1755, B62D 7/15, B60W 10/188, B60W 10/20, B60W 30/18, B60W 30/045

(54) **ASSISTANCE A LA CONDUITE D'UN VEHICULE AVEC INHIBITION DE LA COMMANDE DE BRAQUAGE DES ROUES ARRIERE**
FAHRERASSISTENZ VON EINEM FAHRZEUG MIT DEAKTIVIERUNG DER HINTERRÄDERLENKSTEUERUNG
DRIVING ASSISTANCE OF A VEHICLE WITH INHIBITION OF REAR WHEEL STEERING CONTROL

(30) Priorité: 25.03.2014 FR 1452500
(43) Date de publication de la demande: 01.02.2017
(73) Titulaire: Renault s.a.s., 92100 Boulogne-Billancourt (FR)
(72) Inventeur: FRANCESCONI, Walter, F-27920 Saint Etienne Sous Bailleul (FR)
(86) Numéro de dépôt international: PCT/FR2015/050741
(87) Numéro de publication internationale: WO 2015/145062

(56) Documents cités:
- EP-A2- 0 728 644
- US-A- 4 971 174

## Description

### Domaine technique de l'invention

L'invention concerne un procédé d'assistance à la conduite d'un véhicule automobile, comprenant une phase de correction de la trajectoire du véhicule comportant une étape d'actionnement d'un dispositif correcteur électronique de trajectoire et une étape de pilotage d'un dispositif de braquage des roues arrière du véhicule.

L'invention a pour objet également un système d'assistance à la conduite d'un véhicule automobile qui comprend les éléments logiciels et matériels qui mettent en œuvre le procédé d'assistance, ainsi qu'un véhicule automobile comprenant un tel système d'assistance.

### État de la technique

Il est connu de l'état de la technique un système d'assistance comprenant un dispositif correcteur électronique de trajectoire, par exemple connu sous l'acronyme « ESP » établi à partir de sa dénomination anglo-saxonne « Electronic Stability Program », qui remplit une fonction de contrôle et de stabilité de la trajectoire d'un véhicule automobile. Plus précisément, un tel dispositif correcteur électronique de trajectoire remplit souvent une première fonction d'anti-patinage et une seconde fonction de correction de trajectoire. Pour cela, il est apte à piloter des actionneurs associés aux roues avant et/ou aux roues arrière pour imposer à chacune d'elles un couple de freinage et/ou un couple moteur qui dépend de la correction de trajectoire recherchée par le dispositif correcteur électronique de trajectoire.

Il est aussi connu de l'état de la technique un système d'assistance comprenant un dispositif de braquage des roues arrière du véhicule, par exemple connu sous l'acronyme « 4RD ». Ce dispositif permet ainsi d'avoir un véhicule où les quatre roues sont directrices en imposant un angle de braquage des roues arrière. A titre d'exemple, le document FR2916180 décrit une solution dans laquelle une consigne de braquage des roues arrière est générée par une unité de commande lors d'une situation de freinage avec adhérence asymétrique également appelé freinage « MuSplit », cette unité de commande pouvant être le calculateur du dispositif correcteur électronique de trajectoire.

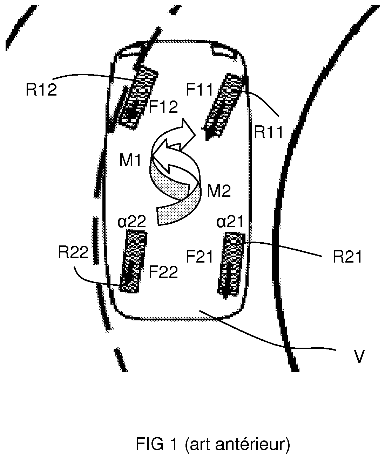

La figure 1 illustre un exemple de situation pour un véhicule automobile V en conditions de sous-virage. Lorsque le véhicule automobile équipé des deux roues avant droite et gauche R11, R12 et des deux roues arrière droite et gauche R21, R22 s'inscrit dans un virage à droite avec une vitesse longitudinale trop élevée compte tenu des limites physiques imposées par l'adhérence entre les pneumatiques et le sol dans le virage, il devient impossible de respecter la courbure de la route et le véhicule automobile V commence à adopter des conditions de sous-virage : la trajectoire réelle du véhicule commence à s'écarter vers l'extérieur du virage par rapport à la trajectoire théorique qui dépend par exemple de l'angle du volant du véhicule. Le dispositif correcteur électronique de trajectoire intervient alors automatiquement pour maintenir le véhicule sur la trajectoire désirée par le conducteur. Il fait en sorte qu'un couple de freinage et/ou un couple moteur soit transmis aux roues avant R11, R12 et/ou aux roues arrière R21, R22 pour imposer à chacune d'elles un effort moteur ou de freinage F11, F12, F21, F22, respectivement, qui dépend de la correction de trajectoire recherchée par le dispositif correcteur électronique de trajectoire. Le but est de contrôler le comportement dynamique du véhicule en lacet et d'obtenir une décélération maximale. L'effet général du dispositif correcteur électronique de trajectoire est de tendre, via le pilotage des efforts F11, F12, F21, F22 appliqués aux roues, vers la génération d'un couple mécanique de lacet M1 adapté au contrôle du sous-virage pour ramener le véhicule dans un sens dirigé vers l'intérieur du virage.

Dans les mêmes conditions de sous-virage où le conducteur impose une augmentation naturelle de l'angle du volant pour tenter de rejoindre la trajectoire, toujours en référence à la figure 1, le dispositif de braquage des roues arrière du véhicule a tendance à faire pivoter les roues arrière R21, R22 autour d'un axe sensiblement vertical selon un angle de braquage respectivement α21, α22. Le pilotage du braquage des roues arrière R21, R22 est mis en œuvre de sorte à leur imposer un braquage dans le même sens de rotation que celui des roues avant, notamment au-delà d'une certaine vitesse, par exemple au-delà de 60 km/h. Ce braquage des roues arrière R21, R22 génère une dérive de train arrière du véhicule V qui a tendance à ouvrir la trajectoire du véhicule V vers l'extérieur du virage pour favoriser sa stabilité. Autrement dit, la mise en place des angles de braquage respectivement α21, α22 pour les roues arrière droite et gauche R21, R22 a pour effet de générer un couple mécanique de lacet M2 opposé au couple mécanique M1 et adapté pour ramener le véhicule dans un sens dirigé vers l'extérieur du virage.

Actuellement, il est connu une organisation du système d'assistance passant par une interaction du dispositif de braquage des roues arrière du véhicule et du dispositif correcteur électronique de trajectoire. Leurs effets sont antagonistes en conditions de sous-virage, les couples mécaniques de lacet M1 et M2 étant orientés dans des sens opposés. Le dispositif de braquage des roues arrière génère une tendance transitoire à ouvrir la trajectoire du véhicule pour stabiliser le véhicule via une augmentation du taux de sous-virage et une réduction du lacet du véhicule alors que le dispositif correcteur électronique de trajectoire corrige le sous-virage en créant un couple de lacet opposé pour faire pivoter le véhicule vers l'intérieur du virage. Cette solution d'assistance n'est donc pas optimale et pénalise l'efficacité du contrôle de trajectoire et donc la sécurité active du véhicule.

Le document JP7069230 décrit un système qui contrôle le lacet du véhicule en pilotant les couples moteur ou de freinage appliqué aux roues et les angles de dérive appliqués par un système directionnel des trains pour contrôler la stabilité en lacet du véhicule. Les situations traitées ne concernent que des situations où le véhicule présente un comportement hyper stable.

Le document GB9108131 décrit une méthode utilisant une mesure de l'accélération longitudinale et latérale du véhicule pour élaborer trois grandeurs dédiées au pilotage de trois systèmes responsables respectivement de la distribution des couples appliqués aux roues via les dispositifs de freinage, de la commande des angles de braquage des roues avant et arrière et de la commande de la suspension active. Le but recherché est avant tout d'optimiser le fonctionnement de ces trois systèmes afin que chacun d'entre eux ne puisse jamais être en situation de saturation.

Le document WO200667340 concerne la génération de la consigne de braquage des roues arrière dans le cas d'un freinage avec adhérence asymétrique. Le document FR2907090 décrit quant à lui la génération de la consigne de braquage appliquée à au moins un actionneur de braquage des roues arrière pour réduire les interventions intempestives du dispositif correcteur électronique de trajectoire. Ces deux documents ne traitent que les situations au freinage pour optimiser et garantir les compromis entre l'optimisation du freinage et la stabilité du véhicule et permettent de déterminer des valeurs de consigne en pression envoyées au calculateur du dispositif d'antiblocage de roues et correcteur électronique de trajectoire et des valeurs de consigne d'angle de braquage pour les roues arrière à destination du dispositif de braquage de roues arrière.

Le document EP 0 728 644 A2 concerne un procédé d'assistance à la conduite d'un véhicule automobile tel que décrit dans le préambule de la revendication 1.

### Objet de l'invention

Le but de la présente invention est de proposer une solution d'assistance à la conduite d'un véhicule automobile, qui remédie aux inconvénients listés ci-dessus.

Un objet de l'invention est donc de fournir un procédé et un système d'assistance à la conduite d'un véhicule automobile qui permette une optimisation et une amélioration de l'efficacité du contrôle de trajectoire et donc une amélioration de la sécurité active du véhicule.

Cet objet peut être atteint par un procédé d'assistance à la conduite d'un véhicule automobile, comprenant une phase de correction de la trajectoire du véhicule comportant une étape d'actionnement d'un dispositif correcteur électronique de trajectoire et une étape de pilotage d'un dispositif de braquage des roues arrière du véhicule, comprenant une étape d'inhibition de la commande de braquage des roues arrière par le dispositif de braquage des roues arrière mise en œuvre lorsque le dispositif correcteur électronique de trajectoire occupe un état actif.

L'étape d'inhibition de la commande de braquage des roues arrière est mise en œuvre de sorte à assurer une réduction de la vitesse de braquage des roues arrière imposée par le dispositif de braquage des roues arrière tant que le dispositif correcteur électronique de trajectoire occupe l'état actif par rapport à la vitesse de braquage des roues arrière imposée lorsque le dispositif correcteur électronique de trajectoire occupe un état inactif.

L'étape d'inhibition de la commande de braquage des roues arrière peut être mise en œuvre de sorte à assurer une limitation de l'angle de braquage des roues arrière imposé par le dispositif de braquage des roues arrière tant que le dispositif correcteur électronique de trajectoire occupe l'état actif par rapport à l'angle de braquage des roues arrière imposé lorsque le dispositif correcteur électronique de trajectoire occupe l'état inactif.

L'étape d'inhibition de la commande de braquage des roues arrière peut être mise en œuvre lorsque des conditions de sous-virage du véhicule automobile sont détectées.

L'étape d'inhibition de la commande de braquage des roues arrière peut comprendre une étape de transmission d'une première information représentative du fait que le dispositif correcteur électronique de trajectoire occupe l'état actif, notamment une première information représentative du fait que le dispositif correcteur électronique de trajectoire occupe l'état actif pour corriger une situation de sous-virage du véhicule, entre un premier calculateur du dispositif correcteur électronique de trajectoire et un deuxième calculateur du dispositif de braquage des roues arrière et distinct du premier calculateur, la décision pour le deuxième calculateur de mettre en œuvre ladite étape d'inhibition étant conditionnée à la réception de la première information.

Le procédé d'assistance à la conduite peut comprendre une étape de génération par le deuxième calculateur de signaux de sortie assurant la commande d'actionneurs imposant un pivotement des roues arrière selon un angle de braquage et/ou une vitesse de braquage fonction desdits signaux de sortie, les signaux de sortie générés étant différents dans le cas où la première information est reçue par le deuxième calculateur et dans le cas où la première information n'est pas reçue par le deuxième calculateur.

Le procédé d'assistance à la conduite peut comprendre une étape de transmission au deuxième calculateur d'une deuxième information représentative de l'angle occupé par le volant du véhicule et/ou de la vitesse longitudinale du véhicule et les signaux de sortie générés par le deuxième calculateur tiennent compte de la deuxième information reçue par le deuxième calculateur.

L'état actif du dispositif correcteur électronique de trajectoire peut notamment correspondre à l'application sur au moins une roue du véhicule d'un couple moteur et/ou d'un couple de freinage calculé d'une manière permettant de corriger la trajectoire réelle du véhicule et de le faire se rapprocher d'une trajectoire de référence.

Un système d'assistance à la conduite d'un véhicule automobile peut être configuré de sorte à mettre en œuvre une correction de la trajectoire du véhicule et comporter un dispositif correcteur électronique de trajectoire, un dispositif de braquage des roues arrière du véhicule et les éléments logiciels et matériels qui mettent en œuvre le procédé d'assistance précédent.

Le système d'assistance peut comprendre :
- un premier calculateur du dispositif correcteur électronique de trajectoire,
- un deuxième calculateur du dispositif de braquage des roues arrière du véhicule et distinct du premier calculateur,
- un élément de transmission, du premier calculateur vers le deuxième calculateur, d'une première information représentative du fait que le dispositif correcteur électronique de trajectoire occupe l'état actif,
- des actionneurs du dispositif de braquage des roues arrière imposant un pivotement des roues arrière selon un angle de braquage et/ou une vitesse de braquage fonction de signaux de sortie générés par le deuxième calculateur,
- le deuxième calculateur comprenant des éléments de génération desdits signaux de sortie en fonction de la réception ou non de la première information, d'une manière générant sélectivement un premier ensemble de signaux de sortie dans le cas où le dispositif correcteur électronique de trajectoire occupe l'état inactif et la première information n'est pas reçue par le deuxième calculateur, ou un deuxième ensemble de signaux de sortie différent du premier ensemble de signaux de sortie dans le cas où le dispositif correcteur électronique de trajectoire occupe l'état actif et la première information est reçue par le deuxième calculateur, le premier et le deuxième ensemble de signaux de sortie étant configurés de sorte que la vitesse de braquage imposée par lesdits actionneurs par le deuxième ensemble de signaux de sortie étant réduite par rapport à la vitesse de braquage imposée par lesdits actionneurs à partir du premier ensemble de signaux de sortie et/ou de sorte que l'angle de braquage imposé par lesdits actionneurs à partir du deuxième ensemble de signaux de sortie étant limité par rapport à l'angle de braquage imposé par lesdits actionneurs à partir du premier ensemble de signaux de sortie.

Un véhicule automobile pourra comprendre un tel système d'assistance.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 déjà décrite illustre de manière schématique en vue de dessus les conditions de sous-virage pour un véhicule automobile connu équipé d'un dispositif correcteur électronique de trajectoire interagissant avec un dispositif de braquage de roues arrière,
- la figure 2 est une vue synoptique et schématique d'une solution d'assistance à la conduite selon l'invention.

### Description de modes préférentiels de l'invention

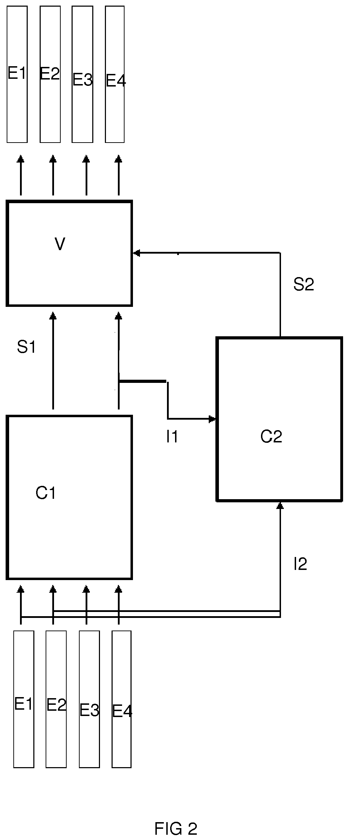

En référence à la figure 2, l'invention concerne un procédé d'assistance à la conduite d'un véhicule automobile, comprenant une phase de correction de la trajectoire du véhicule comportant une étape d'actionnement d'un dispositif correcteur électronique de trajectoire et une étape de pilotage d'un dispositif de braquage des roues arrière du véhicule. Elle concerne aussi un système d'assistance à la conduite d'un véhicule automobile, configuré de sorte à mettre en œuvre une correction de la trajectoire du véhicule et comportant un dispositif correcteur électronique de trajectoire et un dispositif de braquage des roues arrière du véhicule, qui comprend les éléments logiciels et matériels qui mettent en œuvre le procédé d'assistance. Enfin, l'invention porte également sur un véhicule automobile comprenant un tel système d'assistance.

Le procédé d'assistance à la conduite comprend une étape d'inhibition de la commande de braquage des roues arrière par le dispositif de braquage des roues arrière mise en œuvre lorsque le dispositif correcteur électronique de trajectoire occupe un état actif.

Il convient de préférence d'interpréter le terme « inhibition » dans ce document comme signifiant « limitation », ou « annulation », ou « interdiction ».

De manière particulièrement avantageuse, l'étape d'inhibition de la commande de braquage des roues arrière sera mise en œuvre lorsque des conditions de sous-virage du véhicule automobile sont détectées, n'excluant toutefois pas la possibilité de mise en œuvre en dehors de telles conditions, telles que durant des conditions de survirage.

Une correction effective de sous-virage par le dispositif correcteur électronique de trajectoire est prise en considération par le calculateur du dispositif de braquage des roues arrière pour limiter le braquage arrière qui a pour effet d'ouvrir la trajectoire du véhicule et donc d'accentuer de manière transitoire le caractère sous-vireur du véhicule que le dispositif de correction électronique de trajectoire cherche déjà à corriger dans son état actif. Le but est donc de limiter le braquage de ces roues arrière pendant une régulation du dispositif de correction électronique de trajectoire, permettant d'inhiber le dispositif de braquage des roues arrière lorsque le dispositif correcteur électronique de trajectoire est à l'état actif pour contrôler le sous-virage du véhicule.

L'état actif du dispositif correcteur électronique de trajectoire correspond de préférence à l'application sur au moins une roue du véhicule d'un couple moteur et/ou d'un couple de freinage calculé d'une manière permettant de corriger la trajectoire réelle du véhicule et de le faire se rapprocher d'une trajectoire de référence.

Le dispositif correcteur électronique de trajectoire est par exemple du type connu sous l'acronyme « ESP » établi à partir de sa dénomination anglo-saxonne « Electronic Stability Program ». Il est notamment configuré de sorte à pouvoir remplir une fonction de contrôle et de stabilité de la trajectoire du véhicule automobile. Plus précisément, il remplit au moins une fonction de correction de trajectoire et éventuellement une autre fonction d'anti-patinage et peut aussi être en relation avec un dispositif d'antiblocage de roues connu sous l'acronyme « ABS ». Il est notamment apte à piloter, via des signaux de sortie S1 générés par un premier calculateur C1 appartenant au dispositif correcteur électronique de trajectoire, des actionneurs liés aux roues avant et/ou aux roues arrière pour imposer à chacune d'elles un couple de freinage et/ou un couple moteur qui dépend de la correction de trajectoire recherchée par le dispositif correcteur électronique de trajectoire.

Par exemple, lorsque des conditions de sous-virage sont détectées, que le train avant a tendance à dériver davantage que le train arrière, et que l'automobile a tendance à aller tout droit au lieu de suivre la courbe du virage, alors le dispositif correcteur électronique de trajectoire vient occuper son état actif qui lui permet de rétablir la trajectoire du véhicule en donnant l'ordre de freiner la roue arrière intérieure, voire également les deux roues avant dans le cas où le sous-virage est très important. Lorsque des conditions de survirage sont détectées et que le train arrière a tendance à dériver davantage que le train avant, alors le dispositif correcteur électronique de trajectoire vient occuper son état actif qui lui permet de rétablir la trajectoire du véhicule en donnant l'ordre de freiner la roue avant extérieure. Le dispositif correcteur électronique de trajectoire peut aussi envoyer des consignes aux actionneurs de sorte à permettre une réduction du couple moteur délivré, notamment dans le cas où le conducteur du véhicule continue de demander l'accélération du véhicule.

Pour la mise en œuvre de ces stratégies via le premier calculateur C1, le système d'assistance peut comprendre :
- un élément de détermination de l'angle du volant, l'information représentative de l'angle du volant étant notée E1,
- un élément de détermination de la vitesse longitudinale du véhicule, l'information représentative de la vitesse longitudinale du véhicule étant notée E2,
- un élément de détermination de la vitesse de lacet du véhicule, l'information représentative de la vitesse de lacet du véhicule étant notée E3,
- un élément de détermination de l'accélération transversale du véhicule, l'information représentative de l'accélération transversale du véhicule étant notée E4.

A partir du traitement de ces informations E1 à E4 via un algorithme intégré, le premier calculateur C1 génère un ensemble de signaux de sortie S1 qui permettent de piloter les actionneurs du véhicule V de sorte à réaliser la correction de trajectoire assurée par le dispositif correcteur électronique de trajectoire.

Le premier calculateur C1 transmet aussi une première information I1 représentative du fait que le dispositif correcteur électronique de trajectoire occupe son état actif. L'absence de transmission de l'information I1 est représentative du fait que le correcteur électronique de trajectoire occupe son état inactif, ne réalisant alors aucune opération de correction de trajectoire. Cette première information I1 peut être transmise par un réseau multiplexé de la voiture ou tout autre moyen de communication.

Selon l'invention, l'étape d'inhibition de la commande de braquage des roues arrière est mise en œuvre de sorte à assurer une réduction de la vitesse de braquage des roues arrière imposée par le dispositif de braquage des roues arrière tant que le dispositif correcteur électronique de trajectoire occupe l'état actif (c'est-à-dire lorsque la première information I1 est transmise) par rapport à la vitesse de braquage des roues arrière imposée lorsque le dispositif correcteur électronique de trajectoire occupe un état inactif (c'est-à-dire lorsque la première information I1 n'est pas transmise). Autrement dit, l'étape d'inhibition assurera un pilotage des actionneurs correspondants de sorte que la vitesse de braquage des roues arrière imposée par le dispositif de braquage des roues arrière tant que le dispositif correcteur électronique de trajectoire occupe l'état actif est inférieure à la vitesse de braquage des roues arrière imposée lorsque le dispositif correcteur électronique de trajectoire occupe l'état inactif.

Alternativement ou de manière combinée, l'étape d'inhibition de la commande de braquage des roues arrière peut être mise en œuvre de sorte à assurer une limitation de l'angle de braquage (noté α21, α22 sur la figure 1 pour les roues arrière droite et gauche respectivement) des roues arrière imposé par le dispositif de braquage des roues arrière tant que le dispositif correcteur électronique de trajectoire occupe l'état actif (c'est-à-dire lorsque la première information I1 est transmise) par rapport à l'angle de braquage des roues arrière imposé lorsque le dispositif correcteur électronique de trajectoire occupe l'état inactif (c'est-à-dire lorsque la première information I1 n'est pas transmise). Autrement dit, l'étape d'inhibition assurera un pilotage des actionneurs correspondants de sorte que l'angle de braquage des roues arrière imposé par le dispositif de braquage des roues arrière tant que le dispositif correcteur électronique de trajectoire occupe l'état actif est inférieur à l'angle de braquage des roues arrière imposé lorsque le dispositif correcteur électronique de trajectoire occupe l'état inactif.

L'étape d'inhibition de la commande de braquage des roues arrière comprend de préférence une étape de transmission de la première information I1, pouvant notamment être représentative du fait que le dispositif correcteur électronique de trajectoire occupe l'état actif pour corriger une situation de sous-virage du véhicule, entre le premier calculateur C1 du dispositif correcteur électronique de trajectoire et un deuxième calculateur C2 du dispositif de braquage des roues arrière et distinct du premier calculateur C1. De manière particulièrement avantageuse, la décision pour le deuxième calculateur C2 de mettre en œuvre l'étape d'inhibition évoquée précédemment sera conditionnée à la réception de la première information I1 : le deuxième calculateur C2 décide de mettre en œuvre l'étape d'inhibition s'il reçoit la première information I1.

Le procédé d'assistance peut ensuite prévoir la mise en œuvre d'une étape de génération, par le deuxième calculateur C2, de signaux de sortie notés S2, assurant la commande des actionneurs qui imposent un pivotement des roues arrière selon un angle de braquage et/ou une vitesse de braquage fonction desdits signaux de sortie S2. Le pivotement des roues arrière est réalisé autour d'un axe sensiblement vertical. Les signaux de sortie S2 générés par le deuxième calculateur C2 sont différents dans le cas où la première information I1 est reçue par le deuxième calculateur C2 et dans le cas où la première information I1 n'est pas reçue par le deuxième calculateur C2. Autrement dit, les signaux de sortie S2 générés par le deuxième calculateur C2 sont différents dans le cas où le dispositif correcteur électronique de trajectoire est à l'état actif et dans le cas où il occupe l'état inactif. Les signaux de sortie S2 générés par le deuxième calculateur C2 dans le cas où le dispositif correcteur électronique de trajectoire est à l'état actif sont tels qu'ils assurent un pilotage des actionneurs dédiés au braquage des roues arrière provoquant une vitesse de braquage et/ou un angle de braquage inférieurs à celle ou celui imposé par les mêmes actionneurs sous la commande des signaux de sortie S2 générés par le deuxième calculateur C2 dans le cas où le dispositif correcteur électronique de trajectoire occupe son état inactif.

Selon un mode de mise en œuvre non limitatif du champ d'application de la stratégie générale développée ci-dessus, le procédé d'assistance comprend une étape de transmission au deuxième calculateur C2 d'une deuxième information I2 représentative de l'angle occupé par le volant du véhicule et/ou de la vitesse longitudinale du véhicule et les signaux de sortie S2 générés par le deuxième calculateur C2 tiennent compte de la deuxième information I2 reçue par le deuxième calculateur C2. La deuxième information dépend donc en particulier des informations E1 et E2 évoquées précédemment. Il convient d'entendre par là que l'information E1 représentative de l'angle du volant et l'information E2 représentative de la vitesse longitudinale du véhicule sont transmises à l'entrée du deuxième calculateur C2.

Ainsi, à partir du traitement des informations E1 et E2 via un algorithme intégré, et en fonction de la réception ou non de la première information I1 en provenance du premier calculateur C1, le deuxième calculateur C2 génère l'ensemble de signaux de sortie S2 qui permettent de piloter les actionneurs du véhicule V de sorte à réaliser le pivotement des roues arrière assuré par le dispositif de braquage des roues arrière.

Bien évidemment, cela n'exclut pas que les informations E3 et E4 représentatives respectivement de la vitesse de lacet du véhicule et/ou de l'accélération transversale du véhicule soient aussi transmises en entrée du deuxième calculateur C2 et soient utilisées par l'algorithme mis en œuvre par le deuxième calculateur C2 pour le pilotage du braquage des roues arrière.

Il ressort de l'ensemble des explications précédentes que le système d'assistance comprend :
- le premier calculateur C1 du dispositif correcteur électronique de trajectoire,
- le deuxième calculateur C2 du dispositif de braquage des roues arrière du véhicule et distinct du premier calculateur C1,
- un élément de transmission, du premier calculateur C1 vers le deuxième calculateur C2, de la première information I1 représentative du fait que le dispositif correcteur électronique de trajectoire occupe l'état actif,
- des actionneurs du dispositif de braquage des roues arrière imposant un pivotement des roues arrière selon un angle de braquage α21, α22 et/ou une vitesse de braquage fonction des signaux de sortie S2 générés par le deuxième calculateur C2,
- le deuxième calculateur C2 comprenant des éléments de génération de ces signaux de sortie S2, via un algorithme intégré, en fonction de la réception ou non de la première information I1, d'une manière générant sélectivement un premier ensemble de signaux de sortie S2 dans le cas où le dispositif correcteur électronique de trajectoire occupe l'état inactif et la première information I1 n'est pas reçue par le deuxième calculateur C2, et un deuxième ensemble de signaux de sortie S2 différent du premier ensemble de signaux de sortie S2 dans le cas où le dispositif correcteur électronique de trajectoire occupe l'état actif et la première information I1 est reçue par le deuxième calculateur C2, le premier et le deuxième ensemble de signaux de sortie S2 étant configurés de sorte que la vitesse de braquage imposée par lesdits actionneurs par le deuxième ensemble de signaux de sortie S2 étant réduite par rapport à la vitesse de braquage imposée par lesdits actionneurs à partir du premier ensemble de signaux de sortie S2 et/ou de sorte que l'angle de braquage imposé par lesdits actionneurs à partir du deuxième ensemble de signaux de sortie S2 étant limité par rapport à l'angle de braquage imposé par lesdits actionneurs à partir du premier ensemble de signaux de sortie S2.

Dans le procédé et le système d'assistance à la conduite qui viennent d'être décrits, le dispositif de braquage des roues arrière prend en compte l'information I1 indiquant que le dispositif correcteur électronique de trajectoire est actif pour limiter l'évolution du braquage des roues arrière en fonction de l'angle du volant dès le début et pendant la régulation du dispositif correcteur électronique de trajectoire.

Les avantages du procédé et du système d'assistance à la conduite d'un véhicule automobile qui viennent d'être décrits sont une optimisation et une amélioration de l'efficacité du contrôle de trajectoire et donc une amélioration de la sécurité active du véhicule. De plus, cela permet d'améliorer principalement l'efficacité du contrôle de sous-virage pour offrir à l'utilisateur une prestation augmentée en termes de sécurité active. Cela permet de converger plus rapidement vers les besoins en comportement dynamique et de réduire les temps de mise au point des solutions d'assistance à la conduite.

## Revendications

1. Procédé d'assistance à la conduite d'un véhicule automobile, comprenant une phase de correction de la trajectoire du véhicule comportant une étape d'actionnement d'un dispositif correcteur électronique de trajectoire et une étape de pilotage d'un dispositif de braquage des roues arrière du véhicule, ledit procédé comprenant une étape d'inhibition de la commande de braquage des roues arrière par le dispositif de braquage des roues arrière mise en œuvre lorsque le dispositif correcteur électronique de trajectoire occupe un état actif, **caractérisé en ce que** l'étape d'inhibition de la commande de braquage des roues arrière est mise en œuvre de sorte à assurer une réduction de la vitesse de braquage des roues arrière imposée par le dispositif de braquage des roues arrière tant que le dispositif correcteur électronique de trajectoire occupe l'état actif par rapport à la vitesse de braquage des roues arrière imposée lorsque le dispositif correcteur électronique de trajectoire occupe un état inactif.

2. Procédé d'assistance à la conduite selon la revendication 1 , **caractérisé en ce que** l'étape d'inhibition de la commande de braquage des roues arrière est mise en œuvre de sorte à assurer une limitation de l'angle de braquage des roues arrière imposé par le dispositif de braquage des roues arrière tant que le dispositif correcteur électronique de trajectoire occupe l'état actif par rapport à l'angle de braquage des roues arrière imposé lorsque le dispositif correcteur électronique de trajectoire occupe l'état inactif.

3. Procédé d'assistance à la conduite selon l'une des revendications 1 à 2, **caractérisé en ce que** l'étape d'inhibition de la commande de braquage des roues arrière est mise en œuvre lorsque des conditions de sous-virage du véhicule automobile sont détectées.

4. Procédé d'assistance à la conduite selon l'une des revendications 1 à 3, **caractérisé en ce que** l'étape d'inhibition de la commande de braquage des roues arrière comprend une étape de transmission d'une première information (11) représentative du fait que le dispositif correcteur électronique de trajectoire occupe l'état actif, notamment une première information (11) représentative du fait que le dispositif correcteur électronique de trajectoire occupe l'état actif pour corriger une situation de sous-virage du véhicule, entre un premier calculateur (C1) du dispositif correcteur électronique de trajectoire et un deuxième calculateur (C2) du dispositif de braquage des roues arrière et distinct du premier calculateur (C1), la décision pour le deuxième calculateur (C2) de mettre en œuvre ladite étape d'inhibition étant conditionnée à la réception de la première information (I1).

5. Procédé d'assistance à la conduite selon la revendication 4, **caractérisé en ce qu'**il comprend une étape de génération par le deuxième calculateur (C2) de signaux de sortie (S2) assurant la commande d'actionneurs imposant un pivotement des roues arrière selon un angle de braquage et/ou une vitesse de braquage fonction desdits signaux de sortie (S2), les signaux de sortie (S2) générés étant différents dans le cas où la première information (I1) est reçue par le deuxième calculateur (C2) et dans le cas où la première information (I1) n'est pas reçue par le deuxième calculateur (C2).

6. Procédé d'assistance à la conduite selon la revendication 5, **caractérisé en ce qu'**il comprend une étape de transmission au deuxième calculateur (C2) d'une deuxième information (l2) représentative de l'angle occupé par le volant du véhicule et/ou de la vitesse longitudinale du véhicule et **en ce que** les signaux de sortie (S2) générés par le deuxième calculateur (C2) tiennent compte de la deuxième information (I2) reçue par le deuxième calculateur (C2).

7. Procédé d'assistance selon l'une quelconque des revendications 1 à 6, **caractérisé en ce que** l'état actif du dispositif correcteur électronique de trajectoire correspond à l'application sur au moins une roue du véhicule d'un couple moteur et/ou d'un couple de freinage calculé d'une manière permettant de corriger la trajectoire réelle du véhicule et de le faire se rapprocher d'une trajectoire de référence.

8. Système d'assistance à la conduite d'un véhicule automobile, configuré de sorte à mettre en œuvre une correction de la trajectoire du véhicule et comportant un dispositif correcteur électronique de trajectoire et un dispositif de braquage des roues arrière du véhicule, **caractérisé en ce qu'**il comprend les éléments logiciels et matériels qui mettent en œuvre le procédé d'assistance selon l'une quelconque des revendications précédentes.

9. Système d'assistance selon la revendication 8, **caractérisé en ce qu'**il comprend :
- un premier calculateur (C1) du dispositif correcteur électronique de trajectoire,
- un deuxième calculateur (C2) du dispositif de braquage des roues arrière du véhicule et distinct du premier calculateur (C1),
- un élément de transmission, du premier calculateur (C2) vers le deuxième calculateur (C2), d'une première information (I1) représentative du fait que le dispositif correcteur électronique de trajectoire occupe l'état actif,
- des actionneurs du dispositif de braquage des roues arrière imposant un pivotement des roues arrière selon un angle de braquage et/ou une vitesse de braquage fonction de signaux de sortie (S2) générés par le deuxième calculateur (C2),
- le deuxième calculateur (C2) comprenant des éléments de génération desdits signaux de sortie (S2) en fonction de la réception ou non de la première information (I1), d'une manière générant sélectivement un premier ensemble de signaux de sortie (S2) dans le cas où le dispositif correcteur électronique de trajectoire occupe l'état inactif et la première information (I1) n'est pas reçue par le deuxième calculateur (C2), ou un deuxième ensemble de signaux de sortie (S2) différent du premier ensemble de signaux de sortie (S2) dans le cas où le dispositif correcteur électronique de trajectoire occupe l'état actif et la première information (I1) est reçue par le deuxième calculateur (C2), le premier et le deuxième ensemble de signaux de sortie (S2) étant configurés de sorte que la vitesse de braquage imposée par lesdits actionneurs par le deuxième ensemble de signaux de sortie (S2) étant réduite par rapport à la vitesse de braquage imposée par lesdits actionneurs à partir du premier ensemble de signaux de sortie (S2) et/ou de sorte que l'angle de braquage imposé par lesdits actionneurs à partir du deuxième ensemble de signaux de sortie (S2) étant limité par rapport à l'angle de braquage imposé par lesdits actionneurs à partir du premier ensemble de signaux de sortie (S2).

10. Véhicule automobile comprenant un système d'assistance selon l'une des revendications 8 ou 9.

## Patentansprüche

1. Fahrassistenzverfahren für ein Kraftfahrzeug, umfassend eine Phase zur Korrektur der Spur des Fahrzeugs, die einen Schritt des Betätigens einer elektronischen Spurkorrekturvorrichtung und einen Schritt des Ansteuerns einer Fahrzeughinterradlenkvorrichtung umfasst, wobei das Verfahren einen Schritt des Deaktivierens der Hinterradlenksteuerung durch die Hinterradlenkvorrichtung umfasst, der ausgeführt wird, wenn die elektronische Spurkorrekturvorrichtung einen aktiven Zustand einnimmt, **dadurch gekennzeichnet, dass** der Schritt des Deaktivierens der Hinterradlenksteuerung derart ausgeführt wird, dass eine Verringerung der von der Hinterradlenkvorrichtung vorgegebenen Hinterradlenkgeschwindigkeit gegenüber der Hinterradlenkgeschwindigkeit, die vorgegebenen wird, wenn die elektronische Spurkorrekturvorrichtung einen inaktiven Zustand einnimmt, gewährleistet ist, solange die elektronische Spurkorrekturvorrichtung den aktiven Zustand einnimmt.

2. Fahrassistenzverfahren nach Anspruch 1, **dadurch gekennzeichnet, dass** der Schritt des Deaktivierens der Hinterradlenksteuerung derart ausgeführt wird, dass eine Begrenzung des von der Hinterradlenkvorrichtung vorgegebenen Hinterradlenkwinkels gegenüber dem Hinterradlenkwinkel, der vorgegeben wird, wenn die elektronische Spurkorrekturvorrichtung den inaktiven Zustand einnimmt, gewährleistet ist, solange die elektronische Spurkorrekturvorrichtung den aktiven Zustand einnimmt.

3. Fahrassistenzverfahren nach einem der Ansprüche 1 bis 2, **dadurch gekennzeichnet, dass** der Schritt des Deaktivierens der Hinterradlenksteuerung ausgeführt wird, wenn Untersteuerungsbedingungen des Kraftfahrzeugs erkannt werden.

4. Fahrassistenzverfahren nach einem der Ansprüche 1 bis 3, **dadurch gekennzeichnet, dass** der Schritt des Deaktivierens der Hinterradlenksteuerung einen Schritt des Übertragens einer ersten Information (I1), die repräsentativ dafür ist, dass die elektronische Spurkorrekturvorrichtung den aktiven Zustand einnimmt, insbesondere einer ersten Information (I1), die repräsentativ dafür ist, dass die elektronische Spurkorrekturvorrichtung den aktiven Zustand einnimmt, um eine Untersteuerungssituation des Fahrzeugs zu korrigieren, zwischen einem ersten Steuergerät (C1) der elektronischen Spurkorrekturvorrichtung und einem zweiten Steuergerät (C2) der Hinterradlenkvorrichtung, das vom ersten Steuergerät (C1) verschieden ist, umfasst, wobei die Entscheidung, den Schritt des Deaktivierens auszuführen, beim zweiten Steuergerät (C2) an das Empfangen der ersten Information (I1) geknüpft ist.

5. Fahrassistenzverfahren nach Anspruch 4, **dadurch gekennzeichnet, dass** es einen Schritt des Erzeugens von Ausgangssignalen (S2) durch das zweite Steuergerät (C2) umfasst, die das Steuern von Aktoren gewährleisten, die ein Schwenken der Hinterräder gemäß einem Lenkwinkel und/oder einer Lenkgeschwindigkeit vorgeben, die von den Ausgangssignalen (S2) abhängig sind, wobei die erzeugten Ausgangssignale (S2) in dem Fall, in dem die erste Information (I1) von zweiten Steuergerät (C2) empfangen wird, und in dem Fall, in dem die erste Information (I1) vom zweiten Steuergerät (C2) nicht empfangen wird, verschieden sind.

6. Fahrassistenzverfahren nach Anspruch 5, **dadurch gekennzeichnet, dass** es einen Schritt des Übertragens einer zweiten Information (I2), die für den vom Lenkrad des Fahrzeugs eingenommenen Winkel und/oder für die Längsgeschwindigkeit des Fahrzeugs repräsentativ ist, an das zweite Steuergerät (C2) umfasst, und dass die vom zweiten Steuergerät (C2) erzeugten Ausgangssignale (S2) die vom zweiten Steuergerät (C2) empfangene zweite Information (I2) berücksichtigen.

7. Assistenzverfahren nach einem der Ansprüche 1 bis 6, **dadurch gekennzeichnet, dass** der aktive Zustand der elektronischen Spurkorrekturvorrichtung dem Anlegen, an mindestens ein Rad des Fahrzeugs, eines Motormoments und/oder eines Bremsmoments entspricht, das auf eine Weise berechnet wird, die es ermöglicht, die tatsächliche Spur des Fahrzeugs zu korrigieren und sie sich einer Referenzspur annähern zu lassen.

8. Fahrassistenzsystem für ein Kraftfahrzeug, das so ausgestaltet ist, dass es eine Korrektur der Spur des Fahrzeugs ausführt, und das eine elektronische Spurkorrekturvorrichtung und eine Fahrzeughinterradlenkvorrichtung umfasst, **dadurch gekennzeichnet, dass** es die Software- und Hardwareelemente umfasst, die das Assistenzverfahren nach einem der vorhergehenden Ansprüche ausführen.

9. Assistenzsystem nach Anspruch 8, **dadurch gekennzeichnet, dass** es umfasst:
- ein erstes Steuergerät (C1) der elektronischen Spurkorrekturvorrichtung,
- ein zweites Steuergerät (C2) der Fahrzeughinterradlenkvorrichtung, das von dem ersten Steuergerät (C1) verschieden ist,
- ein Übertragungselement zum Übertragen einer ersten Information (I1), die repräsentativ dafür ist, dass die elektronische Spurkorrekturvorrichtung den aktiven Zustand einnimmt, vom ersten Steuergerät (C2) zum zweiten Steuergerät (C2),
- Aktoren der Hinterradlenkvorrichtung, die ein Schwenken der Hinterräder gemäß einem Lenkwinkel und/oder einer Lenkgeschwindigkeit vorgeben, die von Ausgangssignalen (S2) abhängig sind, die vom zweiten Steuergerät (C2) erzeugt werden,
- wobei das zweite Steuergerät (C2) Elemente umfasst zum Erzeugen der Ausgangssignale (S2) in Abhängigkeit vom Empfangen oder Nichtempfangen der ersten Information (I1) auf eine Weise, die selektiv einen ersten Satz Ausgangssignale (S2) in dem Fall erzeugt, in dem die elektronische Spurkorrekturvorrichtung den inaktiven Zustand einnimmt und die erste Information (I1) vom zweiten Steuergerät (C2) nicht empfangen wird, oder einen zweiten Satz Ausgangssignale (S2), der vom ersten Satz Ausgangssignale (S2) verschieden ist, in dem Fall, in dem die elektronische Spurkorrekturvorrichtung den aktiven Zustand einnimmt und die erste Information (I1) vom zweiten Steuergerät (C2) empfangen wird, wobei der erste und der zweite Satz Ausgangssignale (S2) so ausgestaltet sind, dass die von den Aktoren mit dem zweiten Satz Ausgangssignale (S2) vorgegebene Lenkgeschwindigkeit gegenüber der Lenkgeschwindigkeit, die von den Aktoren ausgehend vom ersten Satz Ausgangssignale (S2) vorgegeben wird, verringert ist, und/oder so, dass der von den Aktoren ausgehend vom zweiten Satz Ausgangssignale (S2) vorgegebene Lenkwinkel gegenüber dem Lenkwinkel, der von den Aktoren ausgehend vom ersten Satz Ausgangssignale (S2) vorgegeben wird, begrenzt ist.

10. Kraftfahrzeug mit einem Assistenzsystem nach einem der Ansprüche 8 oder 9.

## Claims

1. Driving assistance method for a motor vehicle, comprising a phase of correcting the trajectory of the vehicle, including a step of actuating an electronic trajectory correction device and a step of driving a device for steering the rear wheels of the vehicle, said method comprising a step of suppressing the command to steer the rear wheels by way of the device for steering the rear wheels, implemented when the electronic trajectory correction device is in an active state, **characterized in that** the step of suppressing the command to steer the rear wheels is implemented so as to reduce the steering speed of the rear wheels imposed by the device for steering the rear wheels for as long as the electronic trajectory correction device is in the active state in comparison with the steering speed of the rear wheels imposed when the electronic trajectory correction device is in an inactive state.

2. Driving assistance method according to Claim 1, **characterized in that** the step of suppressing the command to steer the rear wheels is implemented so as to ensure that the steering angle of the rear wheels imposed by the device for steering the rear wheels is limited for as long as the electronic trajectory correction device is in the active state in comparison with the steering angle of the rear wheels imposed when the electronic trajectory correction device is in the inactive state.

3. Driving assistance method according to either of Claims 1 and 2, **characterized in that** the step of suppressing the command to steer the rear wheels is implemented when understeer conditions of the motor vehicle are detected.

4. Driving assistance method according to one of Claims 1 to 3, **characterized in that** the step of suppressing the command to steer the rear wheels comprises a step of transmitting first information (I1) representative of the fact that the electronic trajectory correction device is in the active state, in particular first information (I1) representative of the fact that the electronic trajectory correction device is in the active state in order to correct an understeer situation of the vehicle, between a first computer (C1) of the electronic trajectory correction device and a second computer (C2) of the device for steering the rear wheels, separate from the first computer (C1), the decision for the second computer (C2) to implement said suppression step being conditional upon the reception of the first information (I1).

5. Driving assistance method according to Claim 4, **characterized in that** it comprises a step of the second computer (C2) generating output signals (S2) commanding actuators that impose pivoting of the rear wheels at a steering angle and/or a steering speed dependent on said output signals (S2), the output signals (S2) that are generated being different if the first information (I1) is received by the second computer (C2) and if the first information (I1) is not received by the second computer (C2) .

6. Driving assistance method according to Claim 5, **characterized in that** it comprises a step of transmitting second information (12) representative of the angle occupied by the steering wheel of the vehicle and/or of the longitudinal speed of the vehicle to the second computer (C2), and **in that** the output signals (S2) generated by the second computer (C2) take into account the second information (I2) received by the second computer (C2).

7. Assistance method according to any one of Claims 1 to 6, **characterized in that** the active state of the electronic trajectory correction device corresponds to the application, to at least one wheel of the vehicle, of an engine torque and/or of a braking torque calculated in such a way as to make it possible to correct the actual trajectory of the vehicle and to bring it towards a reference trajectory.

8. Driving assistance system for a motor vehicle, configured so as to correct the trajectory of the vehicle and including an electronic trajectory correction device and a device for steering the rear wheels of the vehicle, **characterized in that** it comprises the software and hardware elements that implement the assistance method according to any one of the preceding claims.

9. Assistance system according to Claim 8, **characterized in that** it comprises:
- a first computer (C1) of the electronic trajectory correction device,
- a second computer (C2) of the device for steering the rear wheels of the vehicle, separate from the first computer (C1),
- an element for transmitting first information (I1) representative of the fact that the electronic trajectory correction device is in the active state from the first computer (C2) to the second computer (C2),
- actuators of the device for steering the rear wheels, imposing pivoting of the rear wheels at a steering angle and/or a steering speed dependent on output signals (S2) generated by the second computer (C2),
- the second computer (C2) comprising elements for generating said output signals (S2) on the basis of the reception or lack of reception of the first information (I1), in such a way as to selectively generate a first set of output signals (S2) if the electronic trajectory correction device is in the inactive state and the first information (I1) is not received by the second computer (C2), or a second set of output signals (S2) different from the first set of output signals (S2) if the electronic trajectory correction device is in the active state and the first information (I1) is received by the second computer (C2), the first and the second set of output signals (S2) being configured such that the steering speed imposed by said actuators by way of the second set of output signals (S2) is reduced in comparison with the steering speed imposed by said actuators on the basis of the first set of output signals (S2) and/or such that the steering angle imposed by said actuators on the basis of the second set of output signals (S2) is limited in comparison with the steering angle imposed by said actuators on the basis of the first set of output signals (S2).

10. Motor vehicle comprising an assistance system according to either of Claims 8 and 9.
